# EUROPÄISCHE PATENTSCHRIFT

(11) **EP 0 716 033 B1**
(45) Veröffentlichungstag und Bekanntmachung des Hinweises auf die Patenterteilung: **14.01.1998**
(21) Anmeldenummer: 95810750.0
(22) Anmeldetag: 30.11.1995
(51) Int. Cl.: B65G 1/04, B65G 59/06

(54) **Einrichtung zur Bestückung von Robotern oder Produktionsmaschinen mit Werkstücken**
Device for fitting out robots or production machines with workpieces
Dispositif pour équiper des robots ou des machines de production avec des pièces

(30) Priorität: 02.12.1994 CH 3661/94
(43) Veröffentlichungstag der Anmeldung: 12.06.1996
(73) Patentinhaber: August Schmid-Stiftung Zürich, CH-8001 Zürich (CH)
(72) Erfinder: Schmid, August, CH-8603 Schwerzenbach (CH)
(74) Vertreter: Bosshard, Ernst

(56) Entgegenhaltungen:
- DE-A- 1 556 626
- FR-A- 2 430 902
- GB-A- 2 210 866
- US-A- 4 161 654
- US-A- 4 257 532
- US-A- 4 558 802
- US-A- 4 986 715

## Beschreibung

Die Erfindung bezieht sich auf eine Einrichtung nach dem Oberbegriff des Patentanspruches 1. Eine derartige Einrichtung ist bekannt aus der US-A-4 558 802.

Bei der Herstellung von Kunststoffteilen durch automatisch arbeitende Kunststoff-Spritzgussmaschinen sind vielfach die zu spritzenden Teile mit metallischen Einlagen zu versehen, die beispielsweise mit Kunststoff umspritzt werden sollen. Solche Einlagen werden den Spritzgussmaschinen üblicherweise von Hand zugeführt.

Um bei grossen Serien solche automatisch arbeitenden Spritzgussmaschinen in Abwesenheit von Personal arbeiten zu lassen - also beispielsweise in der Nacht - ist eine maschinelle Zufuhr solcher Einlagen notwendig. Wenn komplizierte Bewegungen, beispielsweise in mehreren Achsen notwendig sind, eignet sich zum Einlegen von Bestandteilen der Einsatz programmierbarer Roboter, die zugleich auch für das Entfernen der fertigen Produkte eingesetzt werden können. Eine solche robotertaugliche Einrichtung zur Speicherung von Werkstücken setzt voraus, dass diese eine hohe Aufnahmekapazität für Werkstücke hat und die Werkstücke in vereinzelter Form einfach zu entnehmen sind. Da der Platz für solche Werkstückspeicher üblicherweise in der Höhe als auch im Umfeld von Produktionsmaschinen beschränkt ist, ist ein kompakter Aufbau wesentlich.

Mit der Erfindung soll die Aufgabe gelöst werden, eine kompakte Einrichtung zur Speicherung und zur Vereinzelung von Werkstücken zu schaffen, die eine hohe Aufnahmekapazität für Werkstücke hat und sich zudem leicht auf unterschiedliche Werkstücke umstellen lässt.

Diese Aufgabe wird durch die im Kennzeichen des Anspruches 1 genannten Merkmale gelöst.

Die Entnahmestelle der Werkstücke aus den Stapelvorrichtungen befindet sich stets am gleichen Ort, auch wenn nach der Entleerung einer Stapeleinrichtungen nachfolgend weitere, mit Werkstücken gefüllte Stapeleinrichtungen zum Einsatz kommen. Dadurch wird die Programmierung eine Entnahmeeinrichtung, insbesondere eines Roboters vereinfacht, da dieser stets von der gleichen Entnahmestelle ausgehen kann. Da die Stapeleinrichtungen einen einfachen Aufbau haben, erleichtert dies die Anpassung an unterschiedliche Werkstückarten und Werkstückgrössen.

In der Zeichnung sind Ausführungsbeispiele des Erfindungsgegenstandes dargestellt und werden nachfolgend näher beschrieben. Es zeigen:
- Fig.1: einen Vertikalschnitt durch einen Werkstückspeicher mit mehreren Stapeleinrichtungen
- Fig.2: einen Schnitt nach der Linie II-II in Fig. 1
- Fig.3: einen Vertikalschnitt durch eine Ausführungsvariante
- Fig.4: eine Ausführungsform mit einer Vereinzelungseinrichtung für Kugeln

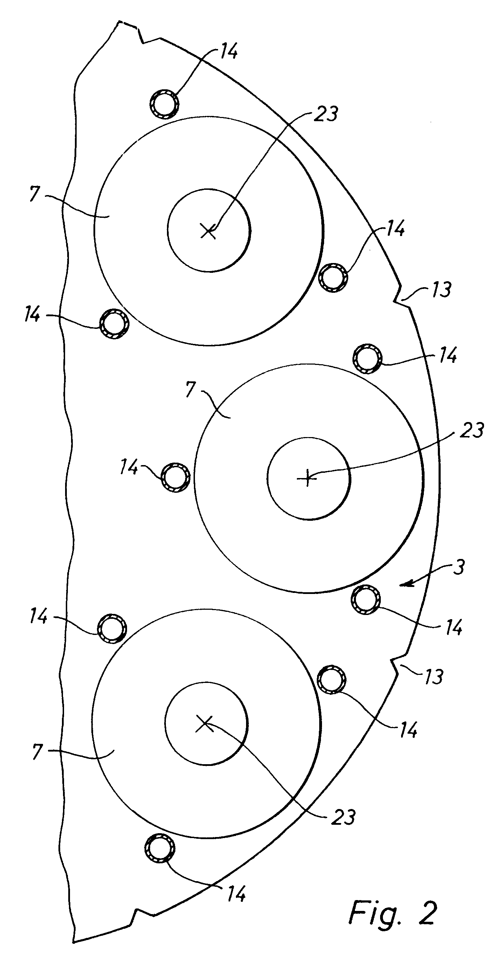

Die Einrichtung enthält einen Drehteller 3, welcher zur Aufnahme eines Werkstückspeichers 1 dient, der eine Mehrzahl von Stapeleinrichtungen 2 enthält. In der Mitte des Drehtellers 3 befindet sich eine vertikale Säule 4, die mit dem Drehteller 3 drehfest verbunden ist. Oberhalb des Drehtellers 3 ist mindestens eine Stützscheibe 5 vorhanden; vorzugsweise sind jedoch mehrere derselben in Abständen voneinander oberhalb des Drehtellers 3 angeordnet. Diese Stützscheiben 5 dienen zur Halterung von Stangen 14 oder Rohren, welche zur Aufnahme der zu stapelnden Werkstücke 7 dienen. Wie aus Fig. 2 hervorgeht, sind drei dieser Stangen 14 vorhanden, die bezogen auf eine Mittellinie 23 zueinander winkelversetzt angeordnet sind. Je zwei einer Stapeleinrichtung 2 zugehörigen Stangen 14 sind mit dem Drehteller durch Schrauben 19 starr verbunden. Am oberen Ende der Stangen 14 befinden sich ebenfalls Schrauben 21 zur Befestigung dieser Stangen 14 mit der obersten Stützscheibe 2. Die dritte Stange 14 reicht nicht ganz bis zum Drehteller 3, sodass sich eine Entnahmeöffnung 26 für die gestapelten Werkstücke ergibt.

Am unteren Ende der Säule 4 ist ein Achsstummel 17 vorhanden, der den Drehteller 3 durchdringt und in die Säulenbohrung eingreift und in einem Lagerbock 15 durch Kugellager 25 drehbar abgestützt ist. Dieser Lagerbock 15 ruht auf einer stationären Unterlage 27 und ist allenfalls mit dieser befestigt. Die Stützscheiben 5 sind mittels Ringflanschen 28 mit der Säule 4 drehfest verbunden und können durch Lösen je einer Schraube 30 in der Höhe verstellt werden.

Auf der Unterseite des Drehtellers 3 befindet sich ein mit diesem verbundenes Zahnrad 8, in welches ein Ritzel 9 eines Antriebsmotores 10 eingreift. Der Achsstummel 17 durchdringt das Zahnrad 8. Mit diesem Antriebsmotor 10 wird eine Teildrehung des Drehtellers und somit des ganzen Werkstückspeichers um einen Kreissektor vorgenommen, wobei der Sektor so gewählt wird, dass jeweils die nächste Stapeleinrichtung 2 den Platz der vorhergehenden Stapeleinrichtung einnimmt. Wenn somit beispielsweise sechs Stapeleinrichtungen 2 vorhanden sind, erfolgt die Verdrehung jeweils um 60°.

Die einzelnen Werkstücke 7 werden jeweils von einem Roboter oder einer diesem zugeordneten Einrichtung an der Entnahmestelle 26 aus der Stapeleinrichtung 2 entnommen. Hernach rutschen die darüber gestapelten Werkstücke 7 nach, bis alle Werkstücke 7 entnommen sind. Die Überwachung, ob in der Stapeleinrichtung 2 noch Werkstücke vorhanden sind, erfolgt durch einen Fühler 11, der mit einem Schalter 12 zusammenwirkt. Wenn kein Werkstück mehr nachrutscht, bewirkt dies über weitere Schaltmittel, dass der Antriebsmotor 10 eingeschaltet wird und dadurch der Drehteller um eine vorbestimmte Teildrehung verdreht wird. Die Ausschaltung der Drehbewegung kann entweder durch einen Schalter 22 erfolgen, welcher in eine zugeordnete Raste 13 am Drehtellerumfang einfällt und dadurch den Antriebsmotor 10 stillsetzt. Anstelle einer solchen Rasteinrichtung könnte der Antriebsmotor 10 auch als Schrittmotor ausgebildet werden, der eine vorbestimmte Zahl von Schritten ausführt, bis die gewünschte Teildrehung des Drehtellers 3 erreicht ist.

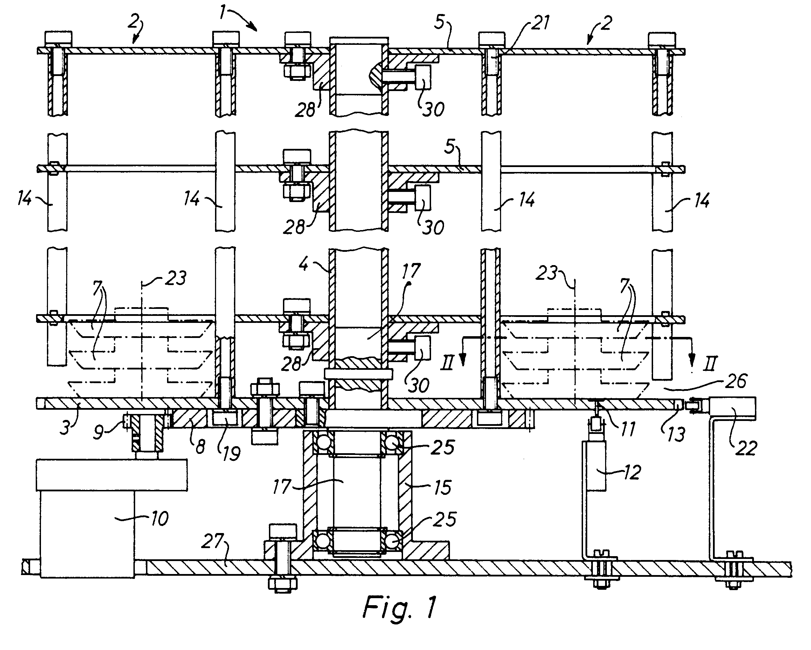

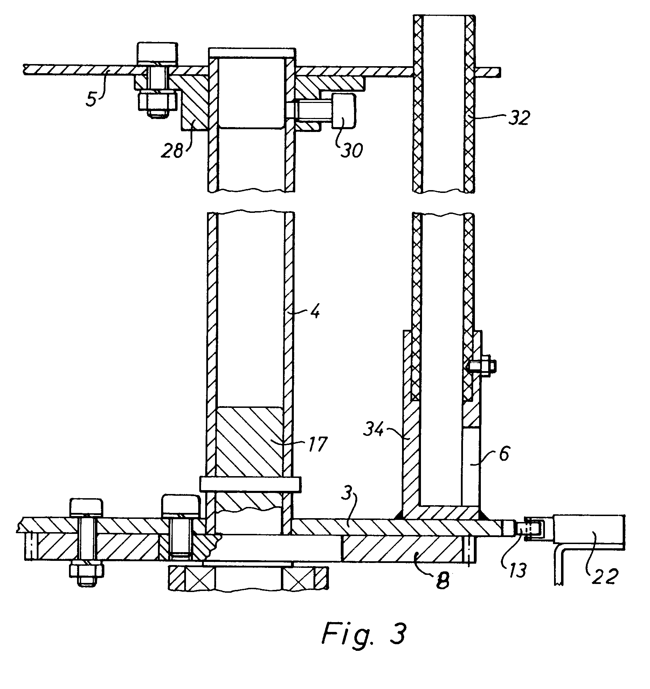

In Fig. 3 ist eine Ausführungsvariante dargestellt, bei welcher die Stapeleinrichtungen aus mehreren Rohren 32 bestehen, die auf dem Drehteller 3 um eine Säule 4 herum kranzartig angeordnet und starr befestigt sind. Das untere Ende des Rohres 32 sitzt in einer Hülse 34, die eine Entnahmeöffnung 6 aufweist. Im übrigen ist die Ausbildung sinngemäss gleich wie bei Fig. 1. Die Rohre 32 dienen vor allem zur Aufnahme runder Werkstücke, beispielsweise Kugeln, die zu vereinzeln sind.

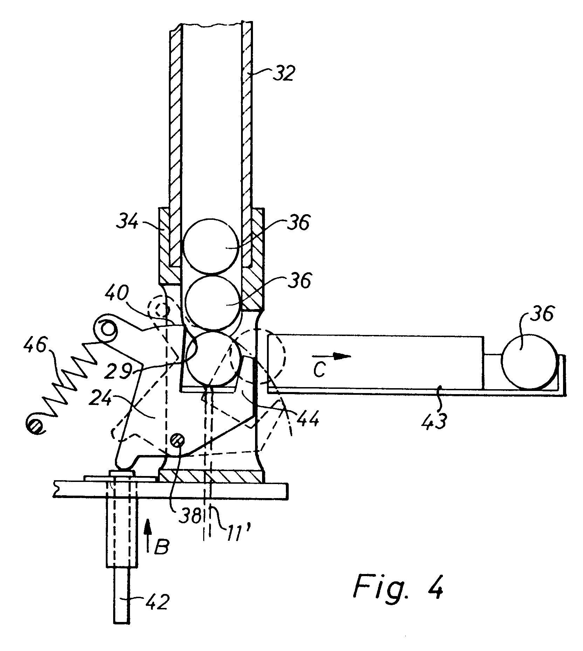

In Fig. 4 ist eine Ausführungsvariante einer Vereinzelungsvorrichtung für Kugeln dargestellt. Die einzelnen Kugeln 36 liegen lose übereinander im Innern des Rohres 32. Die sich am unteren Ende des Rohres 32 befindliche Hülse 34 enthält eine Entnahmeöffnung 6, in die eine Wippe 24 hineinragt. Diese Wippe 24 ist um eine horizontale Drehachse 38 drehbar gelagert. Die Wippe 24 ist oben mit einer gewölbten Sperrfläche 40 zur Abstützung einer Kugel 36 versehen, wenn die darunter liegende Kugel ausgestossen wird. Wenn der Stössel 42 in Richtung des Pfeiles B betätigt wird, gelangt die Wippe 24 aus der in vollen Linien gezeichneten Ruhelage in die in unterbrochenen Linien gezeichnete Schwenklage. In dieser Schwenklage wird der Auslass für eine Kugel 36 in Richtung des Pfeiles C freigegeben, da die Sperrnase 44 der Wippe 24 unter die Auslassöffnung der Kugel 36 gelangt. Zugleich kommt die Sperrfläche 40 unterhalb der darüber liegenden Kugel 36 zu liegen und verhindert ein Nachrutschen derselben. Bei der Verschwenkung der Wippe drückt deren Nocken 29 die Kugel in Richtung des Pfeiles C. Nach dem Zurückschwenken der Wippe 24 durch eine Feder 46 rutscht die zuvor am Herabfallen gehinderte Kugel nach unten, wird aber an einem Verlassen der Wippe 24 in Richtung des Pfeiles C durch die Sperrnase 44 gehindert. Die Betätigung des Stössels 42 kann in an sich bekannter Weise durch einen Elektromotor zusammen mit einem Exzenter oder durch einen Elektromagnet erfolgen. Die Steuerung erfolgt in Abhängigkeit der Entnahmebewegung des Roboters.

Der Antrieb für alle Stössel 42 erfolgt durch einen gemeinsamen, sich unterhalb des Drehtellers 3 befindlichen stationären Elektromotor oder Elektromagnet. Der Taster 11' kann seitlich der Wippe 24 angeordnet werden.

## Patentansprüche

1. Einrichtung zum Bestücken von Robotern oder Produktionsmaschinen mit Werkstücken, mit einem Werkstückspeicher mit mehreren vertikalen Stapeleinrichtungen (2), welche auf einem durch einen Antriebsmotor (10) angetriebenen Drehteller (3) angeordnet sind, wobei der Drehteller (3) eine zentrale, drehbare, vertikale Säule (4) aufweist um die herum die Stapeleinrichtungen (2) kranzartig angeordnet sind, dadurch gekennzeichnet, dass oberhalb des Drehtellers (3) und koaxial zu diesem mindestens eine mit der Säule (4) drehverbundene Stützscheibe (5) für die Stapeleinrichtungen (2) vorhanden ist, die Stapeleinrichtungen (2) je an ihrem unteren Ende oberhalb des Drehtellers (3) eine quer zur Achse der vertikalen Säule (4) offene Entnahmeöffnung (6, 26) für die Ausgabe der Werkstücke (7) enthalten und ein das unterste Werkstück (7) abfühlender Taster (11) vorhanden ist, welcher nach Abzug des letzten Werkstückes (7) des zugeordneten Stapels über Schaltmittel (12) den Antriebsmotor (10) einschaltet zur Verdrehung des Drehtellers (3) um eine vorbestimmte Teildrehung.

2. Einrichtung nach Anspruch 1, dadurch gekennzeichnet, dass jede der Stapeleinrichtungen (2) mindestens drei vertikale, bezüglich einer Mittellinie (23) radial distanzierte, zueinander winkelversetzte Stangen (14) aufweist, die in einem vertikalen Abstand vom Drehteller (3) von mindestens einer Stützscheibe (5) abgestützt sind und das untere Ende einer der Stangen (14) zur Bildung der Entnahmeöffnung (26) von der Auflagefläche des untersten Werkstückes (7) einen vertikalen Abstand hat.

3. Einrichtung nach einem der Ansprüche 1 oder 2, dadurch gekennzeichnet, dass sich unterhalb des Drehtellers (2) ein Lagerbock (15) befindet, in welchem ein Achsstummel (17) drehbar abgestützt ist, der Achsstummel (7) den Drehteller (3) und ein Antriebs-Zahnrad (8) durchdringt, in die zentrale Säule (4) eingreift und mit dieser drehfest verbunden ist.

4. Einrichtung nach Anspruch 1, dadurch gekennzeichnet, dass die Stapeleinrichtungen auf dem Drehteller (3) abgestützte Rohre (32) enthalten zur Aufnahme von Werkstücken (36), dass sich bei der Entnahmeöffnung (6) jedes Rohres (32) eine schwenkbare, federnd abgestützte Wippe (24) befindet, die in der Ruhelage eine die Ausgabe eines Werkstückes (36) verhindernde Sperrnase (44) aufweist und in der Schwenklage das Werkstück (36) frei gibt, die Wippe (24) eine sich oberhalb der Sperrnase (44) befindliches, das Nachrutschen eines nachfolgenden Werkstückes (36) verhinderndes Sperrogan (40) befindet solange sich die Wippe (24) in der Schwenklage befindet, und ein auf die Wippe (24) einwirkender Betätigungsantrieb (42) vorhanden ist.

## Claims

1. Device for supplying work pieces to robots or production machines, with a workpiece magazine with several vertical stacking units (2), which are supported on a turntable (3) and driven by a motor (10), wherein the turntable (3) having a central, rotatable vertical column (4) around to which the stacking units (2) are crown-like arranged, characterised in that
for the stacking units (2) at least one support member (5) is arranged above and coaxial to the turntable (3) and rotationally secured to the column (4), each of the stacking units (2) having at the lower end above the turntable (3) an open withdrawal opening (6, 26) for retrieving work pieces (7) disposed crosswise to the axis of the column (4), and a sensor (11) is disposed feeling the lowest work piece (7) and switching on the motor (10) by means of a switching device (12) after leaving of the last work piece (7) of the respective stacking unit (2) for the rotation of the turntable (3) about a defined partial rotation.

2. Device according to claim 1, characterised in that each of said stacking units (2) comprises at least three vertical, with respect to a center line (23) radially spaced guide members (14), which are angular displaced one to each other and connected to the at least one support member (5) in a vertical distance to said turntable (3), and the lower end of each guide members (14) having a vertical distance to the bearing surface for the lowest work piece (7) to form the withdrawal opening (26).

3. Device according to claim 1 or 2, characterised in that a bearing bushing (15) is arranged below the turntable (3), in which a axis end stub (17) is rotatable mounted, said axis end stub (17) passing through the turntable (3) and through a gear wheel (8) and is meshing and rotational secured with said central column (4).

4. Device according to claim 1, characterised in that for the reception of work pieces (36) said stacking units (2) having pipes (32), which are supported on the turntable (3), that at the withdrawal opening (6) of each pipe (32) a tilting, springy supported rocker element (24) is arranged, which having a finger (44) for preventing the discharge of a work piece (36) and for expelling a work piece (36) in the tilting position, that a closure section (40) is mounted above the finger (44) of the rocker element (24) for preventing the movement of the next work piece (36), when said rocker element (24) is being moved into said tilting position, and a discharge drive (42) is arranged for the movement of the rocker element (24).

## Revendications

1. Dispositif pour équiper des robots ou des machines de production de pièces à usiner, comportant un magasin pour pièces à usiner comportant plusieurs dispositifs (2) d'empilage verticaux, qui sont disposés sur un plateau (3) tournant entraîné par un moteur (10) d'entraînement, le plateau (3) tournant comportant une colonne (4) centrale verticale, tournante, autour de laquelle les dispositifs (2) d'empilage sont disposés en couronne, caractérisé en ce qu'il est prévu, au-dessus du plateau (3) tournant et coaxialement à celui-ci, au moins un disque (5) de support pour les dispositifs (2) d'empilage qui est solidaire en rotation de la colonne (4), les dispositifs (2) d'empilage ayant chacun, à leur extrémité inférieure, au-dessus du plateau (3) tournant, une ouverture (6,26) de prélèvement ouverte, transversale à l'axe de la colonne (4) verticale pour la sortie des pièces (7) à usiner et il est prévu un palpeur (11) qui détecte la pièce (7) à usiner la plus basse
et qui, après extraction de la dernière pièce (7) à usiner de l'empilement associé branche, par l'intermédiaire d'un moyen (12) de commutation, le moteur (10) d'entraînement pour faire tourner le plateau (3) tournant à une vitesse de rotation prescrite.

2. Dispositif suivant la revendication 1, caractérisé en ce que chacun des dispositifs (2) d'empilement comporte au moins trois barres (14) verticales, décalées angulairement les unes par rapport aux autres, radialement à distance d'une ligne (23) de milieu, les barres étant supportées à distance verticalement du plateau (3) tournant par au moins un disque (5) de support et l'extrémité inférieure d'une des barres (14) est à distance verticalement de la surface d'appui de la pièce (7) à usiner la plus basse pour former l'ouverture (26) de prélèvement

3. Dispositif suivant l'une des revendications 1 ou 2, caractérisé en ce qu'un palier (15) se trouve en-dessous du plateau (2) tournant, un tourillon (17) étant supporté dans ce palier de manière à pouvoir tourner, le tourillon (17) traversant le plateau (3) tournant et une roue (8) dentée motrice, pénétrant dans la colonne (4) centrale et en étant solidaire en rotation.

4. Dispositif suivant la revendication 1, caractérisé en ce que les dispositifs d'empilement comportent des conduits (32) pour recevoir des pièces (36) à usiner supportés par le plateau (3) tournant, en ce qu'une pièce (24) basculante, supportée élastiquement se trouve à l'ouverture (6) de prélèvement de chaque conduit (32), la pièce basculante (24) comportant, au repos, un taquet (44) de blocage, qui empêche l'extraction d'une pièce (36) à usiner et libérant à l'état basculé la pièce (36) à usiner, la pièce (24) basculante ayant un organe (40) de blocage, qui se trouve au-dessus du taquet (44) de blocage et qui empêche l'abaissement d'une pièce (36) à usiner suivante tant que la pièce (24) basculante se trouve à l'état basculé, et un dispositif (42) de commande agissant sur la pièce (24) basculante étant prévu.
